# EUROPEAN PATENT APPLICATION

(11) **EP 3 744 534 A1**
(43) Date of publication of application: **02.12.2020**
(21) Application number: 18902301.3
(22) Date of filing: 28.12.2018
(51) Int. Cl.: B44C 3/08, A44C 21/00

(54) **DEVICE FOR MANUFACTURING A COMPOSITE ARTICLE (VARIANTS) AND ARTICLE**

(30) Priority: 24.01.2018 RU 2018102690
(71) Applicant: Aktsionernoe Obshchestvo "Goznak", St. Petersburg, 197046 (RU)
(72) Inventor: TRACHUK, Arkadiy Vladimirovich, St.Petersburg, 199004 (RU); KURYATNIKOV, Andrey Borisovich, Moscow, 129128 (RU); KORNILOV, Georgiy Valentinovich, Moscow, 117198 (RU); FEDOROVA, Elena Mikhailovna, Moscow, 115093 (RU); AKININ, Alexey Borisovich, Moscow, 109462 (RU); ZHAVORONKOV, Konstantin Genrikhovich, Dolgoprudnyi, Moskovskaya oblast, 141107 (RU); BOEV, Sergey Nikolaevich, Odintsovo, Moskovskaya oblast, 143005 (RU); SHCHEPIN, Viktor Gennadievich, Moscow, 127562 (RU); KHARLAMOV, Konstantin Vladimirovich, Perm, 614087 (RU)
(74) Representative: Hoffmann Eitle
(86) International application number: PCT/RU2018/000894
(87) International publication number: WO 2019/147165

(57) **Abstract**

The invention relates to inorganic and polymer chemistry and can be used in the manufacture of multi-layered composite articles, for example, coin-like articles such as coins, medals, tokens, etc., consisting of at least two elements, preferably made of different materials, and also relates to articles produced using a device for manufacturing the same, and more particularly to embossing devices. An embossing tool for forming a coin-like article having a composite insert is comprised of a cylindrical workpiece and a relief. The relief is configured on one of faces of said workpiece, the face consisting of a peripheral portion and a central portion. The central portion is disposed lower than the peripheral portion. The relief disposed in the central portion is formed by the intersection of surfaces of revolution of the second order with structural transitions and an engraving. The engraving is disposed on spherical or conical surface and also on a lateral surface for an edge element of the article, which is less than or equal in height to the interface between the two structural elements of the coin-like article, particularly, the metal ring and the composite insert. The invention ensures secure joining of two structural elements of a coin-like article, particularly, a metal ring a composite insert, without damaging the latter.

## Description

### Technical Field

The invention relates to inorganic and polymer chemistry and can be used in the manufacture of multi-layered composite articles, for example, coin-like articles, such as coins, medals, tokens, etc., consisting of at least two elements, preferably made of different materials, and also relates to articles produced using a device for manufacturing same, and more particularly, to embossing devices.

### Description of Related Art

Currently, in the manufacture of various articles, for example, for decorative, jewelry and other applications, an embossing tool is used, which can be either manual or automated means for applying engravings, images, inscriptions, etc. to a future article, for example, coins of miscellaneous purpose.

A method of manufacturing coins using an embossing device is known which comprises producing disk-shaped and ring-shaped blanks of components from different materials; making a groove on a disk face; coupling the components, and embossing, the method further comprising producing a second ring blank with inner diameter matching the outer diameter of the first ring; then making grooves to the face of the disk, all the grooves being formed at an angle to the disk plane; after coupling the disk and the first ring, forming inclined grooves in the face of the coupled disk, and before embossing, connecting the coupled disk with the second ring (RU 2125824 C1, 10.02.1999).

A method of manufacturing coin and token articles using a dedicated embossing device is known which comprises edge-rolling a disk blank while performing planetary movement relative to deforming surface of a die plate of the edge-rolling machine and at frictional interaction between lateral surface of the disk blank and the base of the guide groove of a transporting rotor of the machine; decorating the lateral surface of a disk blank after the edge-rolling by embossing ridges on said surface of the disk blank or by forming an annular open groove on said surface, followed by embossing ridges on the groove base; said decorating of the lateral surface of the disk blank being accomplished while performing planetary movement relative to the decorating surface or surfaces of the die plate of respective edge-rolling machine and at frictional interaction between sides of the guide groove of the transporting rotor of the machine and peripheral sections of edge surfaces adjacent to the front and back surfaces of the disk, respectively (RU 2219816 C1, 27.12.2003) .

A method of manufacturing a coin is known which comprises forming a decorative surface with an isosceles trapezoid profile on a blank by a special embossing device; forming a microrelief of symbol elements by stamping to form various types of patterns, and embossing the blank, wherein the decorative surface is formed on the blank face in the form of a single groove by compressing the blank on the face perimeter and then indenting a tool with proper profile at an angle of 5-25° between the trapezoid sides, said producing of a microrelief being performed at the lower base of the trapezoid before embossing (RU 2169515 C1, 06.27.2001).

### SUMMARY OF THE INVENTION

The technical problem solved by the present invention is to enable manufacturing an integral composite article made of at least two different materials joined to each other by an embossing tool without damaging the article.

The problem is solved by an embossing tool for forming a coin-like article having a composite insert, the embossing tool comprising according to a first embodiment a cylindrical workpiece and a relief configured on at least one of its faces, said face consisting of a peripheral portion and a central portion; wherein the central portion is disposed lower than the peripheral portion, and the relief disposed in the central portion is formed by the intersection of surfaces of revolution of the second order with structural transitions and an engraving disposed on a spherical surface and also on a lateral surface for an edge element of the article, said edge element being less than or equal in height to the interface between the two structural elements of the coin-like article - the metal ring and the composite insert.

The problem is also solved by an embossing tool for forming a coin-like article having a composite insert, the embossing tool comprising according to a second embodiment a cylindrical workpiece and a relief configured on at least one of its faces, said face consisting of a peripheral portion and a central portion; wherein the central portion is disposed lower than the peripheral portion, and the relief disposed in the central portion is formed by the intersection of surfaces of revolution of the second order with structural transitions and an engraving disposed on a conical surface and also on a lateral surface for an edge element of the article, said edge element being less than or equal in height to the interface between the two structural elements of the coin-like article - the metal ring and the composite insert.

The problem is solved by manufacturing of a coin or token article using a tool according to any of the above embodiments.

The technical result of the present invention is a possibility of secure joining of two structural elements of a coin-like article, particularly, a metal ring and a composite insert, without damaging the latter.

### Brief Description of the Drawings

Fig. 1 is a longitudinal section of a tool according to a first embodiment;
Fig. 2 is view A in Fig. 1;

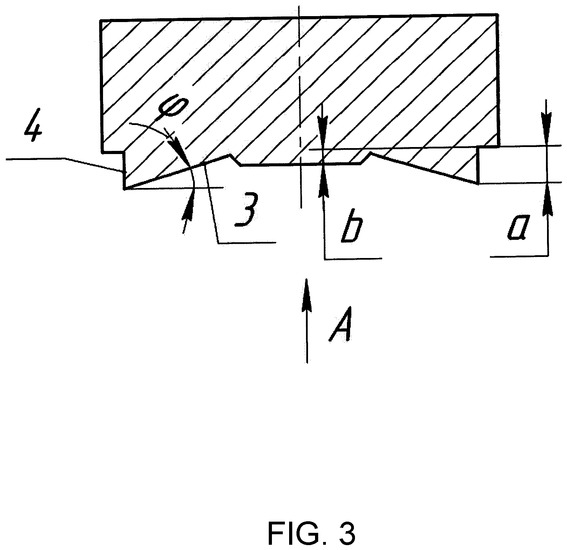

Fig. 3 is a cross-sectional view of a tool according to a second embodiment;
Fig. 4 is a view A in Fig. 3;
Fig. 5 is a general view of a tool according to the first embodiment;

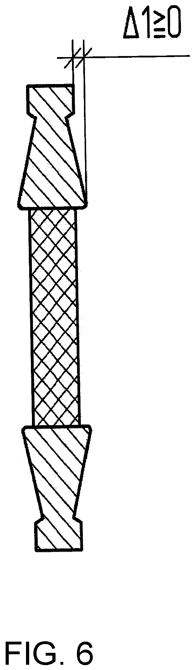

Fig. 6 is a general view of a tool according to a second embodiment.

### Description of Preferred Embodiment

Conventionally, a composite coin or token article is embossed at the first contact of an embossing tool with the article blank in its central portion, particularly, the central portion of the blank, followed by movement of the tool towards the periphery of the composite coin or token article. In so doing, plastic deformation of the metal and, therefore, setting of an engraving occurs from the central portion of the article towards its peripheral portion. This is attained through creating a difference between heights of the central and peripheral portions of the embossing tool. The peripheral portion is lower than the central one. Such a design of the embossing tool is necessary to reduce the total pressing effort when the coin or token article is formed, and, in particular, to form its peripheral portion, i.e. the edge element.

Unlike the above method, when the inventive embossing tool is used, the first contact of the embossing tool with the blank of a composite coin or token article occurs in its peripheral portion, followed by movement towards the central region. Plastic deformation of the metal and, therefore, setting of engraving occurs from the peripheral portion of the article towards its central portion.

When the present embossing tool is used, plastic deformation of the blank of the article occurs only in the region of metal part of the composite article, i.e. the ring, while the embossing tool does not touch the non-metallic central insert.

The present embossing tool can set metal at the interface between elements of the composite article while increasing the thickness of the metal element in the central portion of the resulting finished article compared the initial parameters of the metal part blank. The embossing tool does not touch the non-metallic insert. The non-metallic insert is made of plastic, glass and other material.

With this process scheme of embossing the article, it becomes possible to reset the insert of any non-metallic material in the central portion of the article without damaging the insert with Young's modulus of E ≥ 15 GPa. For example, silicate glass has E = 56 GPa, glass-filled nylon and polyamide have E = 65 GPa.

The embossing tool is comprised of a cylindrical workpiece and a relief applied to one of its faces.

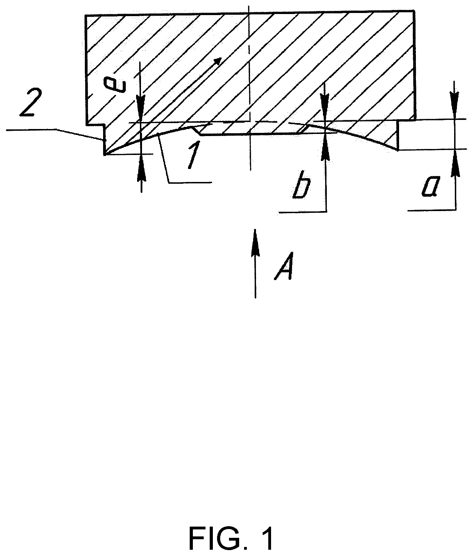

Relief of the embossing tool according to a first embodiment is formed by intersection of surfaces of revolution of the second order with structural transitions and an engraving disposed on a spherical surface 1 and on a lateral surface 2, which is one of surfaces of an edge element of the article relief. Fig. 1 shows an example of a tool having parameters and dimensions presented in Table 1.

**Table 1**

| Parameter | Value |
|---|---|
| a | Depends on article design |
| b | 10-50% of a |
| e | 0.5a-1.5a |
| d1 | Depends on article design |
| d2 | Depends on article design |
| d3 | Depends on insert diameter |

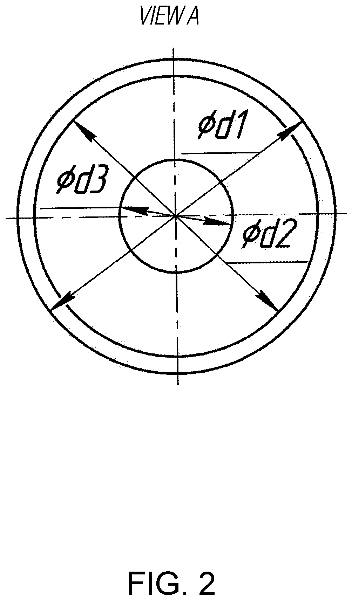

When the generatrix of the spherical surface 1 degenerates into a straight line with angle of inclination ϕ, the spherical surface degenerates into a conical surface 3 with angle ϕ at the generatrix and a lateral surface 4. Fig. 2 shows an example of a tool according to a second embodiment having parameters and dimensions presented in Table 2.

**Table 2**

| Parameter | Value |
|---|---|
| a | Depends on article design |
| b | 10-50% of a |
| ϕ | 5-15° |
| d1 | Depends on article design |
| d2 | Depends on article design |
| d3 | Depends on insert diameter |

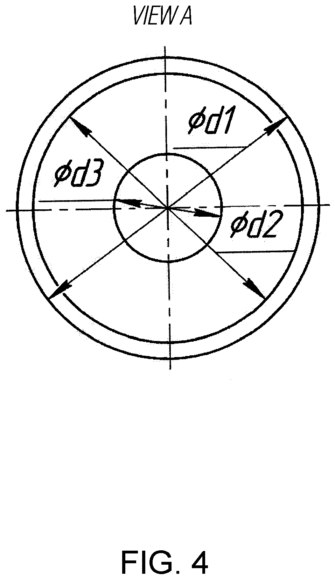

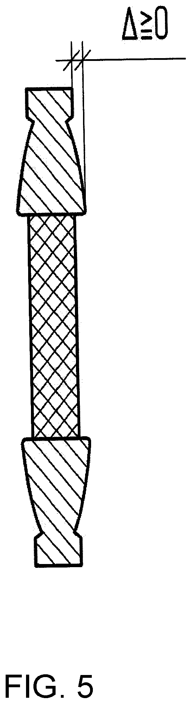

With this embossing scheme, function of the edge element, particularly, protection of the engraving, goes to the interface between the structural elements of the resulting composite article. This is due to the fact that the engraving is disposed on a spherical or conical surface, and the size of the edge (radial protrusion on the plane of the finished article) is less than or equal in height to the interface between two structural elements of the resulting article. Fig. 4a shows the difference in their heights Δ and Δ1 with a spherical tool, and Fig. 5 shows the same with a conical tool, where Δ and Δ1 are equal to zero at the same height thereof. If their heights are different, Δ and Δ1 are greater than zero. The option where Δ and Δ1 are greater than zero is preferable as it enables applying engraving to the edge and preserving it in use of the article.

### Industrial Applicability

The invention can be used in inorganic and polymer chemistry, particularly, in the manufacture of multi-layered composite articles, for example, coin-like articles such as coins, medals, tokens, etc., consisting of at least two elements, preferably made of different materials, and also articles produced using a device for manufacturing the same, and more particularly, an embossing tool.

## Claims

1. An embossing tool for forming a coin-like article having a composite insert, ***characterized in* that** the embossing tool is comprised of a cylindrical workpiece and a relief configured on at least one of its faces, said face consisting of a peripheral portion and a central portion, wherein the central portion is disposed lower than the peripheral portion, and the relief disposed in the central portion is formed by the intersection of surfaces of revolution of the second order with structural transitions and an engraving disposed on a spherical surface and also on a lateral surface for an edge element of the article, said edge element being less than or equal in height to the interface between the two structural elements of the coin-like article - the metal ring and the composite insert.

2. An embossing tool for forming a coin-like article having a composite insert, ***characterized in* that** the embossing tool is comprised of a cylindrical workpiece and a relief configured on at least one of its faces, said face consisting of a peripheral portion and a central portion, wherein the central portion is disposed lower than the peripheral portion, and the relief disposed in the central portion is formed by the intersection of surfaces of revolution of the second order with structural transitions and an engraving disposed on a conical surface and also on a lateral surface for an edge element of the article, said edge element being less than or equal in height to the interface between the two structural elements of the coin-like article - the metal ring and the composite insert.

3. A coin or token article, **characterized in that** it is manufactured using the tool according to any one of claims 1 or 2.
